# EUROPÄISCHE PATENTANMELDUNG

(11) **EP 1 544 638 A1**
(43) Veröffentlichungstag der Anmeldung: **22.06.2005**
(21) Anmeldenummer: 04105048.5
(22) Anmeldetag: 14.10.2004
(51) Int. Cl.: G01S 15/93, G01S 13/93

(54) **Abstandsmessvorrichtung zur Steuerung**

(30) Priorität: 16.12.2003 DE 10358857
(71) Anmelder: ROBERT BOSCH GMBH, 70442 Stuttgart (DE)
(72) Erfinder: Hils, Thomas, 75449 Wurmberg (DE)

(57) **Zusammenfassung**

Es wird eine Abstandsmessvorrichtung in einem Fahrzeug vorgeschlagen, die zur Steuerung einer außerhalb des Fahrzeugs angeordneten Einrichtung dient. Hierbei wird eine Aussendung eines Steuerungssignals von der Steuereinheit veranlasst, wobei Abstandssensoren, die an dem Fahrzeug angeordnet sind, das Steuerungssignal aussenden.

## Beschreibung

### Stand der Technik

Die Erfindung geht aus von einer Abstandsmessvorrichtung nach der Gattung des Hauptanspruchs. Es sind bereits Abstandsmessvorrichtungen im Fahrzeug bekannt, die durch Aussendung eines Sendesignals und Empfang des von einem Hindernis reflektierten Signals den Abstand eines Fahrzeugs zu dem Hindernis bestimmen. Ferner ist es bekannt, Vorrichtungen außerhalb des Fahrzeugs, wie z.B. Tore an Einfahrten oder Garagen sowie Schranken, durch tragbare Funkvorrichtungen zu steuern, die von einem Fahrer eines Fahrzeugs in das Fahrzeug mitgenommen und zum Öffnen und/oder zum Schließen z.B. eines Tores vor dem Tor betätigt werden. Aus der DE 41 23 640 A1 ist eine Fernsteuerung für einen Garagentorantrieb bekannt, bei der statt eines solchen Handsenders eine im Auto vorhandene Autoradioantenne als Sendeantenne für das Sendegerät verwendet wird. Hierbei ist eine Trennweiche vorgesehen, die zur Separierung der Radiosignale und der Sendesignale dient.

Vorteile der Erfindung

Die erfindungsgemäße Abstandsmessvorrichtung mit den Merkmalen des Hauptanspruchs hat demgegenüber den Vorteil, dass die Steuerung einer außerhalb des Fahrzeugs angeordneten Vorrichtung über Sendeeinheiten der Abstandsmessvorrichtung durchgeführt wird, die im Übrigen der Messung eines Abstands zwischen dem Fahrzeug und Hindernissen dient. Hierbei kann eine Vorrichtung zum Aussenden der Steuerungssignale verwendet werden, die ausgehend von ihrer Funktion als Abstandssensor bereits zur Aussendung von Signalen ausgelegt ist. Auf ein Anbringen einer gesonderten Sendeeinheit, die z.B. bei einer Autoradioantenne vorgesehen werden müsste, da diese im allgemeinen lediglich zum Empfang von Signalen ausgelegt ist, kann daher verzichtet werden. Zudem wird der Nutzen einer Abstandsmessvorrichtung im Fahrzeug erhöht, da diese für weitere Verwendungen nützlich ist. Darüber hinaus ist es nicht erforderlich, eine gesonderte Fernbedienung als eigenständiges Gerät mit eigener Stromversorgung im Fahrzeug mitzuführen.

Durch die in den Unteransprüchen angegebenen Weiterbildungen und Maßnahmen sind weitere Verbesserungen der im Hauptanspruch angegebenen Abstandsmessvorrichtung möglich. Besonders vorteilhaft ist, dass sich das Messsignal und das Steuerungssignal in Frequenz- und/oder Signalform unterscheiden. Hierdurch wird ein versehentliches Auslösen einer Vorrichtung außerhalb des Fahrzeugs durch ein Messsignal vermieden. Besonders vorteilhaft ist, die Sendeeinheit als einen Ultraschallsender auszuführen, da eine einfache Auswertung von Ultraschallsignalen sowohl für die Abstandsmessung, als auch für die Datenübertragung eines Steuerungswunsches möglich ist.

Ferner ist es vorteilhaft, dass die Sendeeinheit sowohl zum Empfangen eines Messsignals, als auch zum Empfangen eines Kommunikationssignals ausgeführt ist, das von der außerhalb des Fahrzeugs angeordneten Vorrichtung abgegeben wird, die durch die Abstandsmessvorrichtung gesteuert wird. Hierdurch ist es möglich, einen Dialog zwischen der außerhalb des Fahrzeugs angeordneten Vorrichtung und dem Benutzer bzw. einer Steuereinrichtung im Fahrzeug durchzuführen.

Es ist ferner vorteilhaft, alle am Fahrzeug vorhandenen Sendeeinheiten zu aktivieren, wenn ein Steuerungssignal ausgesendet werden soll. Hierdurch muss ein Benutzer das Fahrzeug nicht in einer bestimmten Position zu der zu steuernden Vorrichtung ausrichten.

Beispielsweise bei einer Fahrt durch ein automatisch zu öffnendes Tor kann der Fahrer sowohl mit dem Heck, als auch mit der Vorderseite an das Tor heranfahren, um das Tor mittels einer Ansteuerung über die erfindungsgemäße Abstandsmessvorrichtung zu öffnen.

Ferner ist es vorteilhaft, eine Anzeigeeinheit zur Darstellung einer Funktion der erfindungsgemäßen Abstandsmessvorrichtung als eine Steuerung einer außerhalb des Fahrzeugs vorhandenen Einrichtung vorzusehen. Hierdurch wird ein Benutzer darüber informiert, wann die Abstandsmessvorrichtung im Steuerungsmodus arbeitet und daher gegebenenfalls eine Abstandswarnung nicht erfolgen kann.

### Zeichnung

Ausführungsbeispiele der Erfindung sind in der Zeichnung dargestellt und in der nachfolgenden Beschreibung näher erläutert.

Es zeigen
Figur 1 eine Aufsicht auf ein Fahrzeug mit einer erfindungsgemäßen Abstandsmessvorrichtung vor einem Garagentor,
Figur 2 das Fahrzeug in einer Seitenansicht vor dem Garagentor.

### Beschreibung des Ausführungsbeispiels

Die erfindungsgemäße Abstandsmessvorrichtung kann zur Steuerung beliebiger Einrichtungen außerhalb des Fahrzeugs verwendet werden. Vorteilhaft sind dies insbesondere Vorrichtungen, die zur Freigabe eines Weges oder einer Einfahrt für das Fahrzeug gesteuert werden müssen. Hierunter fallen insbesondere motorisch angetriebene oder elektrisch gesteuerte Garagentore, Einfahrtstore, Schranken, Rampen oder Hubgaragen mit zumindest zwei übereinander angeordneten, beweglichen Parkflächen. Im Folgenden wird die Erfmdung am Beispiel einer Steuerung eines Garagentors näher erläutert.

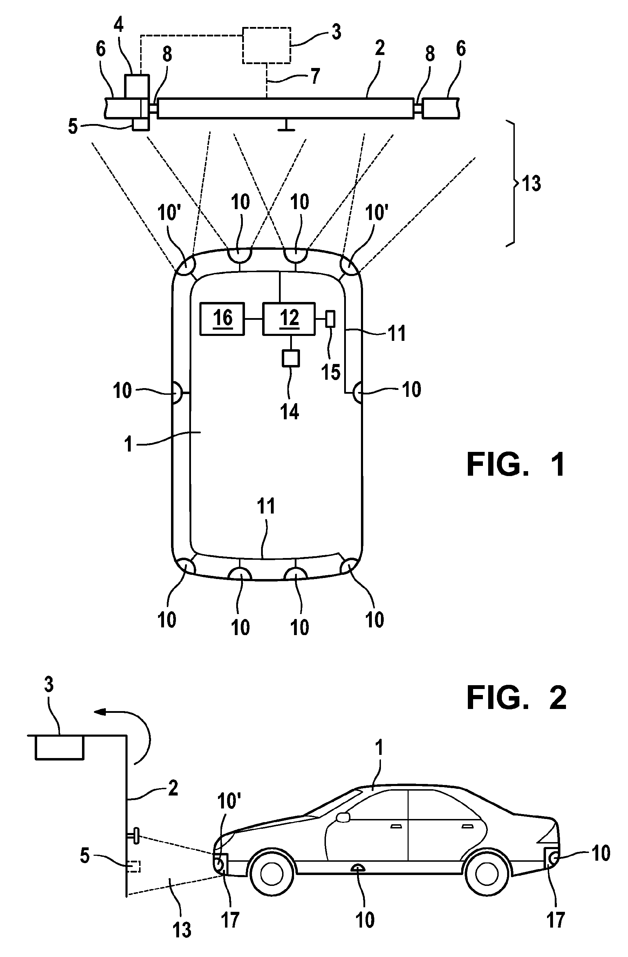

In der Figur 1 ist ein Kraftfahrzeug 1 gezeigt, das schematisch in Aufsicht dargestellt ist. Das Fahrzeug befindet sich vor einem Garagentor 2, das über eine gestrichelt eingezeichnete motorische Steuerung 3 geöffnet und geschlossen werden kann. Die motorische Steuerung 3, der Garagentorantrieb, wird von einer Steuereinheit 4 geregelt, die wiederum mit einer Empfangseinheit 5 verbunden ist. Die Empfangseinheit 5 ist an der Vorderseite einer Wand 6 angeordnet, die das Garagentor einfasst. Die Empfangseinheit 5 ist zum Empfangen eines Steuerungssignals ausgerichtet, mit dem über die Steuereinheit 4 der Garagentorantrieb 3 ausgelöst werden kann. Dieser greift auf einen Antriebsgurt 7 zu, der mit dem Garagentor 2 verbunden ist und das Garagentor 2 in Führungsschienen 8 derart anhebt, dass die zwischen der Wand 6 bestehende Garagentoröffnung freigegeben wird, so dass das Fahrzeug 1 in die auf der dem Fahrzeug 1 abgewandten Seite angeordnete Garage einfahren kann.

Insbesondere kann die Abstandsmessvorrichtung nun zur Überwachung eines nachfolgenden Einfahrens in die Garage verwendet werden. Die Überwachung erfolgt dabei bevorzugt in der Weise, dass bei einer zu starken Annäherung des Fahrzeugs an die Garagenwände ein Warnsignal ausgegeben wird.

Das Fahrzeug weist an der Vorderseite, an der Rückseite und an den Seitenflächen jeweils Abstandssensoren 10, 10' auf, die bevorzugt als Ultraschallsensoren ausgeführt sind. In einer weiteren Ausführungsform ist es auch möglich, dass die Abstandssensoren als Radarsensoren ausgeführt sind. Die Abstandssensoren werden von einer Steuereinheit 12 über einen Datenbus 11 im Fahrzeug angesteuert. Die Abstandssensoren 10, 10' arbeiten in einem Messmodus derart, dass sie ein vorzugsweise zeitlich begrenztes Ultraschallsignal aussenden und danach das von einem Hindernis reflektierte Ultraschallsignal wieder auffangen. Aus der Laufzeit des Ultraschallsignals wird der Abstand zwischen dem Fahrzeug 1 und dem Hindernis berechnet. Insbesondere sind hierzu Sensoren an der Fahrzeugvorderseite und an den Fahrzeugecken angeordnet. Bei dem hier dargestellten Ausführungsbeispiel sind Strahlungskegel 13 der an der Vorderseite angeordneten Abstandssensoren 10, 10' dargestellt. Die Strahlungskegel 13 können sich gegebenenfalls auch überschneiden. Die Steuereinheit 12 ist mit einer Bedieneinheit 14, z.B. einer Drucktaste, verbunden, mit der eine Steuerung des Garagentorantriebs 3 ausgelöst werden kann. Anstelle einer Drucktaste ist es auch z.B. möglich, diese Steuerungsfunktion über eine Menüauswahl in einer Anzeigefläche auszuwählen.

Gegebenenfalls können auch an anderen Orten des Fahrzeugs angeordnete Abstandssensoren verwendet werden. So können z.B. an Lastkraftwagen oder Transportern die Ultraschallsensoren auch im Dachbereich oder auf halber Höhe des Fahrzeugs angeordnet sein. Die Positionierung der Empfangsvorrichtung ist gegebenenfalls entsprechend zu modifizieren.

Wird eine Steuerung des Garagentors gewünscht, so werden in einem ersten Ausführungsbeispiel lediglich die beiden Ecksensoren dazu angeregt, ein Steuerungssignal auszusenden, das zur Steuerung des Garagentors dient und das den Befehl "Garagentor öffnen" darstellt. Das Steuerungssignal wird von der Empfangseinheit 5 empfangen und von der Steuereinheit 12 so verarbeitet, dass das Garagentor 2 nunmehr durch den Garagentorantrieb 3 geöffnet wird. Um ein unberechtigtes Öffnen des Garagentors 2 durch eine beliebige Abstandsmessvorrichtung zu verhindern, ist das Steuerungssignal bevorzugt codiert, wobei die entsprechende Codefolge insbesondere in der Steuereinheit 12 in einem Speicher abgelegt und an eine jeweilige, zu steuernde Vorrichtung, hier das Garagentor 2, anpassbar ist. Zur Anpassung weist die Steuereinheit 12 eine Datenschnittstelle 15 auf, durch die entsprechende Steuerungssignale an die Steuerungseinheit übertragen werden können. In einer ersten Ausführungsform weist das Steuerungssignal die gleiche Frequenz wie das Messsignal auf. Jedoch wird eine bestimmte Abfolge von Sende- und Pausenintervallen des Steuerungssignals festgelegt, so dass eine Art Binärsignal von dem Fahrzeug 1 an die Empfangseinheit 5 übertragen wird. Gegebenenfalls ist es auch möglich, die Signalintensität zu variieren, so dass ein analoges Datensignal übertragen wird.

In weiteren Ausführungsformen ist es auch möglich, dass bei einer Betätigung der Bedieneinheit 14 alle Abstandssensoren 10, 10' des Fahrzeugs 1 zeitgleich das Messsignal aussenden, so dass das Steuerungssignal an eine Empfangseinheit in einer beliebigen Position zu dem Fahrzeug 1 übertragen wird. In einer weiteren Ausführungsform senden die einzelnen Abstandssensoren 10, 10' das Steuerungssignal nacheinander aus, so dass Interferenzen zwischen den Signalen vermieden werden.

Gegebenenfalls ist es auch möglich, dass Abstandssensoren verschiedener Techniken, d.h. technischer Gattungen, z.B. Radarsensoren und Ultraschallsensoren, an dem Fahrzeug 1 angeordnet sind. In diesem Fall ist es im Allgemeinen nur sinnvoll, diejenigen Sensoren derjenigen Gattung anzusprechen, also z.B. nur die Ultraschallsensoren, für deren Signalempfang die Empfangseinheit 5 ausgerichtet ist.

Neben dem Signal "Garagentor öffnen" können gegebenenfalls weitere Funktionen übertragen werden, wie z.B. "Garagentor schließen", "Not aus" oder "Garagentor verriegeln".

In einer bevorzugten Ausführungsform ist es möglich, dass die Empfangseinheit 5 auch als eine Sendeeinheit ausgeführt ist. In diesem Fall wird ein ebenfalls codiertes Signal von der Empfangseinheit 5 an die Abstandssensoren 10, 10' ausgesendet und von mindestens einem der Abstandssensoren detektiert, gegebenenfalls dekodiert und an die Steuereinheit 12 weitergeleitet. Damit ist es z.B. möglich, über Fehlfunktionen, z.B. des Garagentorantriebs 3, zu informieren. Eine solche Fehlfunktion kann dann in einer mit der Steuereinheit 12 verbundenen Anzeigeeinheit 16 im Fahrzeug dargestellt werden. Die Anzeigeeinheit 16 ist hierbei bevorzugt als ein Kombinationsinstrument zur Anzeige einer Vielzahl von Fahrzeuginformationen ausgeführt. Daher kann ein Fahrer, wenn das Garagentor nicht öffnet, über eine jeweils vorliegende Fehlfunktion informiert werden, z.B. über einen Defekt im Torantrieb oder über eine Blockierung des Garagentors. Eine entsprechende Information kann ihm auch dann gegeben werden, wenn der von ihm ausgesendete Code zum Öffnen des Garagentors unzulässig ist oder nicht erkannt werden konnte. Gegebenenfalls kann der Sendevorgang daraufhin wiederholt werden. Hierbei kann von einem Benutzer auch die Eingabe einer Benutzerkennung, z.B. einer Code-Nummer, verlangt und an die Empfangseinheit zur Identifizierung des Benutzers übertragen werden.

Über die Empfangseinheit 5 kann auch ein Bestätigungssignal für ein Empfangen eines Steuerungssignals an das Fahrzeug 1 ausgesendet werden. Eine weitere Aussendung von Steuerungssignalen kann im Folgenden unterbleiben, so dass die Abstandsmessvorrichtung wieder ausschließlich auf eine Abstandsmessung umschalten kann.

Die Anzeigeeinheit 16 kann auch dazu verwendet werden, durch ein entsprechendes Warnsignal auf einen Betrieb der Abstandsmesssensoren zur Steuerung des Garagentors hinzuweisen. Werden die Steuerungssignale kontinuierlich ausgesendet, kann in diesem Fall keine Abstandsmessung erfolgen. In einer weiteren Ausführungsform kann jedoch auch stets zwischen einem Messvorgang, also einem Aussenden eines Messsignals mit einem anschließenden Hörfenster zum Empfangen eines reflektierten Signals, und einer Aussendung eines Steuerungssignals umgeschaltet werden. Damit ist prinzipiell eine fast kontinuierliche Abstandsmessung möglich, während dennoch entsprechende Steuerungssignale ausgesendet werden können.

In der Figur 2 ist eine Seitenansicht des Fahrzeugs 1 vor dem Garagentor 2 dargestellt. Die Empfangseinheit 5 ist gestrichelt eingezeichnet. Sie ist bevorzugt auf der Höhe der Abstandsmessvorrichtungen also bevorzugt in der Höhe eines Stoßfängers 17 des Fahrzeugs 1 angeordnet. Hierdurch wird ein Empfang der von dem Abstandssensor 10 ausgesendeten Steuersignale ermöglicht.

Gemäß einer weiteren Ausführungsform ist es auch möglich, vor der Aktivierung des Garagentorantriebs 3 den Abstand zwischen dem Fahrzeug 1 und dem Garagentor 2 zu bestimmen. Denn gegebenenfalls lässt es sich beim Öffnen des Garagentors 2 nicht vermeiden, dass insbesondere eine Unterkante des Garagentors über die Fläche des Garagentors in Richtung des Fahrzeugs hinausbewegt wird und somit bei einem Öffnen das Fahrzeug 1 beschädigen könnte. In der Steuereinheit 12 ist hierzu ein vorgegebener Mindestabstand für ein Öffnen des Garagentors 2 abgelegt. Wird die Bedieneinheit 14 betätigt, so wird gemäß einer bevorzugten Ausführungsform zunächst der Abstand zwischen dem Fahrzeug 1 und dem Garagentor 2 mittels der Abstandssensoren bestimmt. Ein Befehl zum Öffnen des Garagentors 2 wird von den Abstandssensoren 10, 10' nur dann an die Empfangseinheit 5 übertragen, wenn dieser vorgegebene Mindestabstand zwischen dem Fahrzeug 1 und dem Garagentor 2 überschritten wird. Bevorzugt wird hierzu eine Warnung in der Anzeigeeinheit 16 ausgegeben, z.B. "Abstand zum Tor zu gering". In einer weiteren Ausführungsform ist es auch möglich, dass der Abstand codiert zu der Empfangseinheit 5 übermittelt wird und von der Steuereinheit 4 nur bei einem Überschreiten eines Mindestabstands, der in diesem Fall in der Steuereinheit 4 abgelegt wird, eine Öffnung des Garagentors mittels des Garagentorantriebs 3 ausgelöst wird.

## Patentansprüche

1. Abstandsmessvorrichtung in einem Fahrzeug (1) mit mindestens einer Sendeeinheit (10, 10') zum Ausstrahlen eines Messsignals (13) und mit einer Steuereinheit (12) zur Steuerung der Sendeeinheit (10, 10') derart, dass durch die Sendeeinheit (10, 10') ein Steuerungssignal zur Steuerung einer außerhalb des Fahrzeugs (1) angeordneten Vorrichtung (3, 4, 5) ausgesendet wird.

2. Abstandsmessvorrichtung nach Anspruch 1, **dadurch gekennzeichnet, dass** sich das Messsignal und das Steuerungssignal in ihrer Frequenz und/oder in ihrer Signalform unterscheiden.

3. Abstandsmessvorrichtung nach einem der vorherigen Ansprüche, **dadurch gekennzeichnet, dass** die Sendeeinheit (10, 10') als ein Ultraschallsender ausgeführt ist.

4. Abstandsmessvorrichtung nach einem der vorherigen Ansprüche, **dadurch gekennzeichnet, dass** die Sendeeinheit (10, 10') zum Empfangen eines Messsignals und eines von der außerhalb des Fahrzeugs angeordneten Vorrichtung (3, 4, 5) abgegebenen Signals ausgeführt ist.

5. Abstandsmessvorrichtung nach einem der vorherigen Ansprüche, **dadurch gekennzeichnet, dass** das Steuerungssignal mit allen am Fahrzeug vorhandenen Sendeeinheiten (10, 10') einer Gattung ausgesendet wird.

6. Abstandsmessvorrichtung nach einem der vorherigen Ansprüche, **gekennzeichnet durch** eine Bedieneinheit (14) zum Eingeben eines Steuerungsbefehls zum Veranlassen der Aussendung eines Steuerungssignals an die außerhalb des Fahrzeugs angeordnete Einrichtung.

7. Abstandsmessvorrichtung nach einem der vorherigen Ansprüche, **gekennzeichnet durch** eine Anzeigeeinheit (16) zum Anzeigen eines Betriebszustands der Abstandsmessvorrichtung, insbesondere zum Anzeigen des Aussendens eines Steuerungssignals.

8. Verwendung einer Abstandsmessvorrichtung nach einem der vorherigen Ansprüche zum Ansteuern einer als Garagentorantrieb ausgeführten Vorrichtung außerhalb des Fahrzeugs.
